# FASCICULE DE BREVET EUROPEEN

(11) **EP 1 286 821 B1**
(45) Date de publication et mention de la délivrance du brevet: **17.05.2006**
(21) Numéro de dépôt: 01940682.6
(22) Date de dépôt: 05.06.2001
(51) Int. Cl.: B29C 65/08, B06B 3/00

(54) **SONOTRODE ROTATIVE PERMETTANT DE SOUDER EN CONTINU SUR UNE GRANDE LARGEUR**
DREHENDES ULTRASCHALLHORN ZUM KONTINUIERLICHEN VERSCHWEISSEN AUF EINER GROSSEN BREITE
ROTARY SONOTRODE FOR CONTINUOUS LARGE DIMENSION WELDING

(30) Priorité: 09.06.2000 FR 0007403
(43) Date de publication de la demande: 05.03.2003
(73) Titulaire: Aplix, 75008 Paris (FR)
(72) Inventeur: MOULIN, Serge, F-42450 Sury-le-Comtal (FR); COMBE, Robert, F-42450 Sury-le-Comtal (FR)
(74) Mandataire: Eidelsberg, Olivier Nathan
(86) Numéro de dépôt international: PCT/FR2001/001724
(87) Numéro de publication internationale: WO 2001/094099

(56) Documents cités:
- EP-A- 0 457 187
- EP-A- 0 665 083
- CH-A- 671 529
- FR-A- 2 743 929
- US-A- 5 403 413
- US-A- 5 707 483
- DATABASE WPI Section Ch, Week 199040 Derwent Publications Ltd., London, GB; Class A35, AN 1990-303477 XP002154199 & SU 1 548 072 A (OMSK POLY), 7 mars 1990 (1990-03-07)

## Description

La présente invention concerne une sonotrode, notamment de révolution, en un matériau permettant la propagation d'ondes ultrasonores, comportant un barreau axial destiné à être animé de vibrations longitudinales sous l'effet d'un émetteur d'ultrasons, une partie active reliée au barreau et destinée à être animée de vibrations radiales et des moyens de fixation de chaque extrémité du barreau soit à un moteur à ultrason, soit à un palier de support fixe.

La présente invention concerne en outre un dispositif de soudage à ultrasons comportant une sonotrode de ce genre.

Du document DE-A-1.704.178 publié le 22 Avril 1971, on connaît déjà une sonotrode de révolution du genre mentionné précédemment. A la figure 2 de ce document, par exemple, la sonotrode est constituée d'un barreau axial fixé à l'une de ses extrémités (A) à un moteur à ultrasons destiné à lui faire subir des vibrations longitudinales et d'une partie active (K) animée de vibrations radiales. Compte tenu de la géométrie de la sonotrode, la largeur utile de la partie active, c'est-à-dire la dimension dans le plan transversal parallèle à l'axe du barreau, est petite, ne dépassant pas quelques millimètres, au maximum 8 à 9 millimètres.

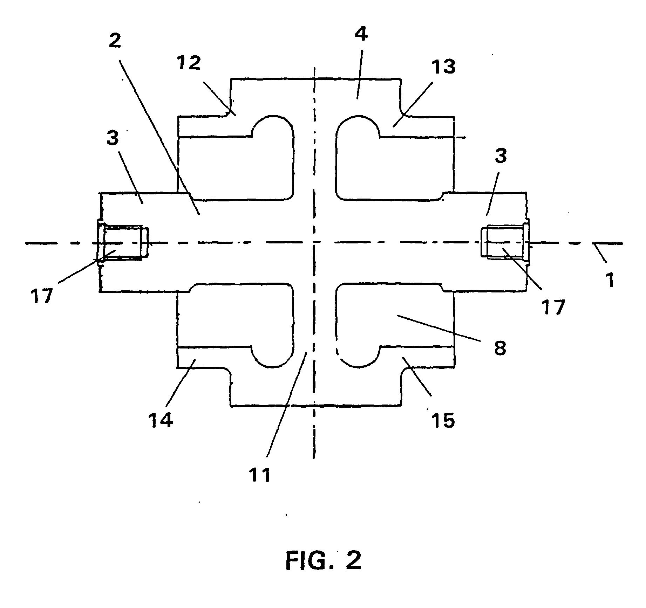

En outre, à la figure 3 de ce document, il est représenté également un barreau axial relié à son extrémité (A) à un moteur produisant des vibrations axiales et une partie active (K) animée de vibrations radiales. La largeur utile de la partie active est également très petite, ne dépassant pas quelques millimètres. La sonotrode dans son ensemble, compte tenu de sa géométrie, est très fragile. Notamment, pour des vibrations trop importantes, elle peut se casser. Cela est encore plus accentué par le fait qu'elle n'est fixée à un moteur qu'à une de ses extrémités, en porte à faux. La structure de la sonotrode de la figure 3 permet, par rapport à celle de la figure 2, d'obtenir des composantes radiales de la vibration de la partie active plus prononcées, et donc une partie active ayant des vibrations radiales plus importantes et donc un soudage meilleur. Cependant, cela est obtenu, par rapport à la structure de la figure 2, au détriment de la solidité de la sonotrode dans son ensemble, et la partie active ne peut avoir que de petites largeurs utiles.

Du document FR 2.082.090 on connaît une sonotrode suivant le préambule de la revendication 1. La sonotrode est pleine et la partie utile n'a qu'une faible largeur. Finalement, CH 671 529 A5 concerne aussi un dispositif pour la génération d'ondes ultrasonores.

La présente invention vise à pallier les inconvénients de l'art antérieur mentionnés précédemment en proposant une sonotrode ayant à la fois une grande largeur utile de sa partie active et une grande robustesse.

Donc, la presente invention vise une sonotrode suivant la revendication 1.

En prévoyant ainsi que le barreau axial s'étende sur toute l'étendue axiale de la sonotrode, on s'assure par rapport à l'art antérieur et notamment par rapport à la figure 3 du document cité précédemment que la sonotrode est très robuste et peut supporter des vibrations radiales de grande amplitude. Dans l'art antérieur, soit le barreau s'étendait de manière ininterrompue sur l'axe et on avait une grande robustesse mais de faibles amplitudes des vibrations radiales et donc une petite largeur, soit on faisait en sorte que les vibrations axiales ou longitudinales soient transférées en totalité vers la partie active par des barreaux de petites sections transversales en empêchant le transfert de toutes vibrations longitudinales le long du barreau axial au-delà de la partie active et on obtenait ainsi de grandes vibrations radiales mais une robustesse de l'ensemble très médiocre de sorte qu'il n'était pas non plus possible de prévoir une largeur utile de la partie active permettant de grandes largeurs de soudure. La demanderesse, en se rendant compte pour la première fois qu'il n'était pas nécessaire de transférer toutes les ondes longitudinales vers la partie active et que l'on pouvait laisser se propager une partie des ondes axiales par le centre en conservant l'aspect continu ininterrompu du barreau axial, a permis pour la première fois d'obtenir une sonotrode du genre mentionné précédemment ayant une largeur utile de la partie active très grande.

Suivant un mode de réalisation préféré de l'invention, la largeur utile de la partie active est supérieure à 15 mm, notamment supérieure à 25 mm et de préférence notamment supérieure à 40 mm.

Suivant un perfectionnement de l'invention, la partie active et les moyens de liaison du barreau axial à la partie active ont, en coupe transversale longitudinale, la forme d'un T. On obtient ainsi un transfert particulièrement bon des vibrations longitudinales en des vibrations radiales tout en ayant une excellente robustesse de la sonotrode.

Suivant un perfectionnement de l'invention, le T constitué d'une hampe et d'une barrette, a, aux extrémités de la barrette, une masselotte.

Suivant un mode de réalisation préféré de l'invention, la section transversale des moyens de liaison de la partie active au barreau axial est sensiblement égale à la section transversale axiale du barreau axial.

La présente invention vise également un dispositif de soudure à ultrasons suivant la revendication 6 comportant une sonotrode suivant la revendication 1, reliée à un ou à ses deux extrémités à un moteur producteur d'ultrasons, avec éventuellement interposition d'un amplificateur ou booster, les deux feuilles destinées à être soudées par ultrasons étant interposées entre la partie active de la sonotrode et la surface extérieure d'une molette.

Aux dessins, donnés uniquement à titre d'exemple, on décrit maintenant des modes de réalisation préférés d'une sonotrode suivant l'invention.

Aux dessins,
la figure 1 représente un premier mode de réalisation d'une sonotrode de révolution suivant l'invention, suivant une vue en coupe transversale longitudinale ; et
la figure 2 est une vue en coupe transversale longitudinale d'un second mode de réalisation d'une sonotrode suivant l'invention.

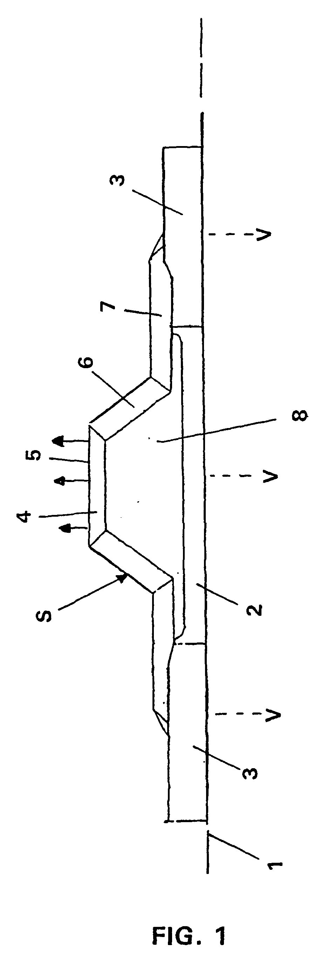

La figure 1 est une vue en coupe transversale longitudinale génératrice d'une sonotrode de révolution suivant l'invention. La sonotrode S est constituée d'un barreau 2 cylindrique circulaire d'axe 1 en métal, par exemple en acier, permettant la propagation d'ondes à ultrasons. A ses deux extrémités, le barreau 2 comporte deux embouts 3 de plus grand diamètre que le reste du cylindre 2. Ces embouts 3 sont reliés à un émetteur d'ultrasons non représenté à la figure mais bien connu de la technique. Entre l'émetteur d'ultrasons et les embouts 3 on peut également prévoir l'interposition d'un booster ou amplificateur des vibrations ultrasonores.

La sonotrode S comporte en outre une partie active 4, en le même matériau que celui du barreau 2. Cette partie active a une forme annulaire circulaire. Dans le plan de la figure, la surface extérieure 5 qui est la surface utile de la partie active est une droite. D'autres formes pourraient éventuellement être prévues, notamment légèrement incurvées ou de forme sinusoïdale. La partie 4 active a une épaisseur inférieure à l'épaisseur du barreau 2 axial. La partie 4 active est reliée aux embouts 3 du barreau 2 axial par des parties 6 et 7 de liaison, en le même matériau que celui du barreau 2. Ces parties 6 et 7 de liaison sont également de révolution par rapport à l'axe 1 de la figure. La première partie 7 de liaison est un cylindre circulaire d'axe parallèle à l'axe 1 du barreau, tandis que la seconde partie 6 de liaison est un tronc de cône. En section transversale longitudinale, c'est-à-dire dans le plan de la figure 1, la seconde partie 6 de liaison est inclinée par rapport à la première partie 7 de liaison. La seconde partie 6 de liaison est également inclinée par rapport à la partie 4 active.

La partie 4 active, les parties 6 et 7 de liaison et le barreau 2 axial, définissent une chambre 8 intérieure séparant le barreau 2 axial de la partie 4 active. La chambre 8 peut être vide ou emplie d'un matériau ne permettant pas la transmission d'ondes ultrasonores à partir du matériau du barreau 2 vers le matériau en question, notamment emplie d'air.

Les vibrations ultrasonores produites par l'émetteur à ultrasons se propagent axialement dans la sonotrode. Les noeuds de la vibration se situent au niveau des embouts du barreau 2 axial et sensiblement au niveau du milieu de la partie 4 active, la sonotrode fonctionnant ainsi en demi longueur d'onde, sa longueur totale correspondant à 3 demi-longueurs d'onde de la fréquence des ondes ultrasonores utilisées, chaque noeud d'amplitude étant un ventre de dilatation radial (effet de compression-extension). On aurait pu prévoir également un nombre supérieur de demi-longueurs d'onde, par exemple 5 ou 7, etc.. Les ondes longitudinales ou axiales se propagent par les parties 6 et 7 de liaison et sont transformées en vibrations radiales (voir les flèches issues de la partie 4 à la figure 1), qui vont permettre d'effectuer une soudure par ultrasons (dégagement d'énergie thermique) au niveau de la partie 4 active entre deux feuilles 9 et 10 (voir la figure 3) que l'on fait passer sur la partie 4 active avec l'aide d'une mollette (non représentée) qui appuie sur les deux feuilles pour les mettre en contact entre elles et avec la partie 4 active.

Le diamètre du barreau 2 axial dans sa partie mince centrale est de 13,5 mm. Le diamètre des deux embouts 3 est de 20 mm. L'épaisseur dans le plan de la figure 1 de la partie 7 de liaison est de 6 mm. L'épaisseur de la partie 6 de liaison est de 8 mm. L'épaisseur de la partie 4 active est de 5 mm.

L'angle formé entre la première partie 7 de liaison et la seconde partie 6 de liaison est d'environ 125°. Le diamètre extérieur de l'anneau circulaire formé par la partie 4 active est de 70 mm. La largeur utile de la partie 4 active, c'est-à-dire la dimension parallèlement à l'axe 1 longitudinal, est de 40 mm.

Suivant un autre mode de réalisation possible, la partie 4 active a la forme d'un cube ou d'un parallélépipède rectangle. De même, le barreau 2 axial peut également avoir une section transversale carrée ou rectangulaire.

La figure 2 représente un second mode de réalisation préféré de l'invention. Les mêmes références numériques désignent des parties identiques, notamment le barreau 2 axial, les parties 3 d'embout et la partie 4 active. La partie 4 active est reliée au cylindre 2 axial par une partie 11 de liaison issue du cylindre 2 axial et perpendiculaire à celui-ci. La partie 4 active et la partie 11 de liaison en forme de disque forment un tore plein dont la section en coupe transversale longitudinale a la forme d'un T. Les deux extrémités 12, 13 de la barrette du T comportent des parties de prolongement formant masselotte 14, 15. Ces deux parties 14 et 15 de prolongement forment des anneaux circulaires de diamètre plus petit que le diamètre de l'anneau circulaire formant la partie 4 active. Il est formé entre le barreau 2 axial et la barrette du T un espace 8 vide, qui pourrait éventuellement être empli d'un matériau ne permettant pas la transmission d'ondes du barreau vers le matériau en question.

Le barreau 2 axial s'étend axialement sur 100 mm dont 35 mm d'extension axiale des deux embouts 3.

Le disque 11 de transfert a une épaisseur (dimension parallèlement à l'axe 1) de 10 mm et un diamètre extérieur de 78 mm. Les deux masselottes ont chacun un diamètre extérieur de 60 mm et un diamètre intérieur de 50 mm. Le diamètre extérieur du barreau 2 au niveau de sa partie centrale plus mince est de 20 mm tandis que les embouts 3 ont un diamètre de 23,5 mm.

Des moyens de fixation 17, par exemple sous la forme d'un trou taraudé pour permettre l'introduction d'un arbre d'un moteur, sont prévus aux deux extrémités du barreau ou moyeu 2 axial.

Chaque moyen de fixation peut recevoir un moteur à ultrason, ou bien un des moyens peut recevoir un moteur à ultrason tandis que l'autre reçoit un arbre ou palier de support fixe.

Les coins formés entre le disque 11 de transfert et le barreau 2 axial peuvent être arrondis pour aider à la propagation des ondes ultrasonores. De même, les coins formés à l'intersection hampe du T - barrette du T peuvent être arrondis. Enfin, les coins formés entre les masselottes et la barrette peuvent également être arrondis dans le même but.

Suivant un autre mode de réalisation possible, la partie 4 active a la forme d'un cube ou d'un parallélépipède rectangle et la partie 11 de liaison a la forme d'un parallélépipède rectangle ou carré, la section en coupe transversale de l'ensemble ayant aussi une forme en T.

## Revendications

1. Sonotrode (S), notamment de révolution, en un premier matériau de propagation d'ondes ultrasonores, notamment en métal, comportant un barreau (2) axial et une partie (4) active reliée au barreau (2) axial et des moyens de fixation de chacune des extrémités du barreau à un moteur produisant des vibrations ultrasonores et/ou à un palier de support, **caractérisée en ce que** le barreau s'étend de manière ininterrompue sur toute l'étendue axiale de la sonotrode, et un espace (8), en un second matériau ne permettant pas la transmission des ondes à ultrasons du premier matériau vers le second, le second matériau étant notamment l'air ou le vide, est interposé entre le barreau (2) et la partie (4) active.

2. Sonotrode (S) suivant la revendication 1, **caractérisée en ce que** la largeur utile de la partie (4) active est comprise entre 15 mm et 40 mm.

3. Sonotrode (S) suivant l'une des revendications précédentes, **caractérisée en ce que** la section transversale des moyens (6, 7, 11) de liaison de la partie (4) active au barreau (2) axial est égale à la moitié de celle du barreau (2) axial.

4. Sonotrode (S) suivant l'une des revendications précédentes, **caractérisée en ce que** la partie (4) active et les moyens (11) de liaison du barreau (2) axial à la partie (4) active forment un tore dont la section transversale a la forme d'un T.

5. Sonotrode (S) suivant la revendication 4, **caractérisée en ce qu'**il est issu de chaque extrémité (13, 14) de la barrette du T une masselotte (14, 15).

6. Dispositif de soudage à ultrason, comportant une sonotrode suivant l'une des revendications précédentes, au moins un moteur à ultrasons étant fixé à au moins une des deux extrémités du barreau (2) axial, avec interposition éventuelle d'un amplificateur.

## Claims

1. A sonotrode (S), more particularly of revolution, made of a first material for propagation of ultrasonic waves, more particularly metal, comprising an axial bar (2) and an active part (4) connected to the axial bar (2) and means for fixing each of the bar ends to a motor producing ultrasonic vibrations and / or to a supporting platform, **characterised in that** the bar extends uninterruptedly over the entire axial extent of the sonotrode, and a chamber (8) made of a second material which does not allow the transmission of ultrasonic waves from the first material to the second, the second material being more particularly air or a void is interposed between the bar (2) and the active part (4).

2. A sonotrode (S) according to claim 1, **characterised in that** the useful width of the active part (4) is between 15 mm and 40 mm.

3. A sonotrode (s) according to one of the preceding claims, **characterised in that** the cross-section of the means (6, 7, 11) for connecting the active part (4) to the axial bar (2) is equal to half that of the axial bar (2).

4. A sonotrode (S) according to one of the preceding claims, **characterised in that** the active part (4) and the means (11) for connecting the axial bar (2) to the active part (4) form a torus, the cross-section of which has the shape of a T.

5. A sonotrode (s) according to claim 4, **characterised in that** a deadhead (14, 15) extends from each end (13, 14) of the cross-bar of the T.

6. An ultrasonic welding device, comprising a sonotrode according to one of the preceding claims, at least one ultrasonic motor being fixed to at least one of the two ends of the axial bar (2) with the possible interposition of an amplifier.

## Patentansprüche

1. Ultraschallhorn (S), insbesondere zur Drehung, aus einem ersten Material, insbesondere aus Metall, zur Ausbreitung von Ultraschallwellen, mit einem axialen Barren (2) und einem mit dem axialen Barren (2) verbundenen aktiven Teil (4), sowie mit Befestigungsmitteln jedes der Enden des Barrens an einem Motor, der Ultraschallvibrationen erzeugt, und/oder an einem Traglager, **dadurch gekennzeichnet, dass** sich der Barren auf ununterbrochene weise über die gesamte axiale Erstreckung des Ultraschallhorns erstreckt und ein Zwischenraum (8) aus einem zweiten Material, das keine Übertragung von Ultraschallwellen vom ersten Material zum zweiten Material gestattet, wobei das zweite Material Luft oder ein Vakuum ist, zwischen den Barren (2) und das aktive Teil (4) eingefügt ist.

2. Ultraschallhorn (S) nach Anspruch 1, **dadurch gekennzeichnet, dass** die Nutzbreite des aktiven Teils (4) zwischen 15 mm und 40 mm liegt.

3. Ultraschallhorn (S) nach einem der vorangehenden Ansprüche, **dadurch gekennzeichnet, dass** der Querschnitt der Mittel (6,7,11) zur Verbindung des aktiven Teils (4) mit dem axialen Barren (2) gleich der Hälfte desjenigen des axialen Barrens (2) ist.

4. Ultraschallhorn (S) nach einem der vorangehenden Ansprüche, **dadurch gekennzeichnet, dass** das aktive Teil (4) und die Mittel (11) zur Verbindung des axialen Barrens (2) mit dem aktiven Teil (4) einen Torus bilden, dessen Querschnitt die Form eines T aufweist.

5. Ultraschailhorn (S) nach Anspruch 4, **dadurch gekennzeichnet, dass** von jedem Ende (13,14) des T-Barrens ein Ausgleichsgewicht (14,15) vorsteht.

6. Ultraschallschweißvorrichtung mit einem Ultraschallhorn gemäß einem vorangehenden Ansprüche, wobei mindestens ein Ultraschallmotor an mindestens einem der zwei Enden des axialen Barrens (2) befestigt ist, wobei eventuell ein Verstärker eingefügt ist.
